# EUROPÄISCHE PATENTSCHRIFT

(11) **EP 0 444 281 B1**
(45) Veröffentlichungstag und Bekanntmachung des Hinweises auf die Patenterteilung: **30.11.1994**
(21) Anmeldenummer: 90124422.8
(22) Anmeldetag: 17.12.1990
(51) Int. Cl.: B60T 8/30, B60T 8/18

(54) **Bremsdruckminderer**
Brake pressure reducer
Réducteur de pression de freinage

(30) Priorität: 28.02.1990 DE 4006265
(43) Veröffentlichungstag der Anmeldung: 04.09.1991
(73) Patentinhaber: Volkswagen Aktiengesellschaft, 38436 Wolfsburg (DE)
(72) Erfinder: Totschnig, Manfred, W-3170 Gifhorn (DE)

(56) Entgegenhaltungen:
- EP-A- 0 156 666
- EP-A- 0 390 621
- CH-A- 501 510
- DE-A- 2 945 027
- DE-A- 3 602 863
- FR-A- 2 388 704
- GB-A- 2 172 354
- PATENT ABSTRACTS OF JAPAN vol. 09, no. 73 (M-368)(1796) 03 April 1985,& JP-A-59 202965 (NITSUSHIN KOGYO) 16 November 1984

## Beschreibung

Die Erfindung betrifft einen Bremsdruckminderer mit variablem Umschaltdruck der im Oberbegriff des Patentanspruchs 1 genannten Art, wie er beispielsweise aus der GB-A-2 172 354 bekannt ist.

Beim Abbremsen eines Kraftfahrzeuges tritt mit zunehmender Bremsverzögerung eine dynamische Achslastverlagerung ein, d. h. es wird ein immer größer werdender Anteil des Fahrzeuggewichts von der Hinterachse zur Vorderachse hin verlagert. Bei Kraftfahrzeugen mit einer festen Bremskraftverteilung vorn/hinten wäre es daher nicht immer zu vermeiden, daß je nach Beladungs- und Straßenzustand sowie je nach Stärke der Abbremsung entweder die Hinter- oder die Vorderachse überbremst wird, d. h. deren Räder blockieren. Insbesondere das Überbremsen der Hinterräder eines Kraftfahrzeuges muß für alle Beladungszustände des Fahrzeuges vermieden werden, weil dies eine Beeinträchtigung der Bremsstabilität des Fahrzeugs zur Folge hätte.

Es ist daher üblich und in vielen Fällen zwingend erforderlich, in der Bremsanlage eines Kraftfahrzeugs Bremskraft- bzw. Bremsdruckregler, häufig auch als Bremskraft- bzw. Bremsdruckverteiler bezeichnet, anzuordnen, mit denen eine möglichst gute Anpassung an die "ideale Bremskraftverteilung" erreicht werden soll. Solche Bremskraft- bzw. Bremsdruckregler werden überwiegend als sogenannte Bremsdruckminderer ausgebildet, durch die oberhalb eines bestimmten Umschaltdrucks der Ausgangsdruck in einem bestimmten Verhältnis gegenüber dem Eingangsdruck gemindert wird.

Üblich sind auch Bremsdruckregler in Form von Bremsdruckbegrenzern, durch die der Ausgangsdruck oberhalb eines Umschaltdrucks unabhängig von einem weiteren Anstieg des Eingangsdrucks auf einen weitgehend konstanten Wert gehalten wird; solche Bremsdruckbegrenzer stellen im Prinzip lediglich einen Grenzfall der vorerwähnten Bremsdruckminderer dar.

Grundsätzlich muß zwischen druckabhängigen und lastabhängigen Bremsdruckreglern, d. h. Bremsdruckbegrenzern und Bremsdruckminderern unterschieden werden.

Der Umschaltdruck pu, bei dem die Begrenzung bzw. Minderung des Ausgansdrucks beginnt, ist bei druckabhängigen Bremsdruckreglern (z. B. ATE Bremsen-Handbuch, 9.1 Auflage 1988, Seite 245) fest eingestellt, bei lastabhängigen Bremsdruckreglern (z. B. ATE Bremsen-Handbuch, 9.1 Auflage 1988, Seite 249) dagegen veränderlich, nämlich in Abhängigkeit von der jeweiligen Fahrzeugbeladung.

Bei druckabhängigen Bremsdruckreglern kann der Umschaltdruck pu sehr genau eingestellt werden, nämlich im allgemeinen mit einer Toleranz von nur ± 1,5 bar, da eine den Umschaltdruck allein bestimmende, den Regelkolben des Bremsdruckreglers beaufschlagende innere Druckfeder in der Fertigung sehr genau einstellbar ist.

Bei bekannten lastabhängigen Bremsdruckreglern, bei denen der lastabhängig veränderliche Umschaltdruck durch die lastabhängige Kraft einer über einen Betätigungshebel auf den ventilbestückten Regelkolben des Bremsdruckreglers wirkende äußere Steuerfeder bestimmt wird, ist eine vergleichbar hohe Genauigkeit für die Umschaltdrücke, insbesondere für kleine Umschaltdrücke ≦ 10 bar dagegen nicht zu erreichen. Dies ist zum einen im wesentlichen darauf zurückzuführen, daß die am Fahrzeug vorzunehmende, einer bestimmten Fahrzeug- bzw. Hinterachslast zugeordnete Einstellung der Steuerfederkraft nur von beschränkter Genauigkeit sein kann, und daß selbst bei vergleichsweise genauer Einstellung der Steuerfederkraft z. B. aufgrund der Reibungen im Betätigungshebelsystem sowie in Dichtungen des Bremsdruckreglers eine Toleranz von etwa ± 4 bar im allgemeinen nicht zu unterschreiten ist. Darüber hinaus wirken sich während des Fahrbetriebs auf das Betätigungshebelsystem einwirkende äußere Einflüsse wie z. B. Schmutz, Korrosion, Schnee und Eis zusätzlich negativ auf die Genauigkeit des Umschaltdrucks aus; die durch solche äußeren Einflüsse möglicherweise bewirkte Schwergängigkeit des Betätigungshebelsystems wirkt sich natürlich besonders stark bei der Genauigkeit niedriger Umschaltdrücke von z. B. ≦ 10 bar aus, zu denen ja jeweils nur eine sehr kleine Hebelkraft gehört.

Niedrige Umschaltdrücke von ≦ 10 bar werden für solche Kraftfahrzeuge benötigt, bei denen der Anteil der Hinterachslast am Gesamtgewicht des Fahrzeugs bei leerem Fahrzeug sehr klein und bei beladenem Fahrzeug sehr groß ist, z. B. bei Nutzfahrzeugen mit Frontantrieb. Durch solche verschmutzungsbedingten undefinierten Umschaltdruckveränderungen, insbesondere -erhöhungen kann die Bremsstabilität solcher Fahrzeuge bei leerem Fahrzeug somit sehr nachhaltig verschlechtert werden.

Aus der GB-A-2 172 354 ist nun entsprechend dem Oberbegriff des Patentanspruchs 1 ein Bremsdruckminderer mit variablem Umschaltdruck bekannt, welcher einen von einer vorgespannten Steuerfeder linearer Kennung mit einer lastabhängigen Federkraft beaufschlagten schwenkbaren Betätigungshebel aufweist, durch den ein ventilbestückter axial verschiebbarer Regelkolben bei ausreichend hoher Steuerfederkraft axial in eine ventilöffnende Endlage verschiebbar ist, wobei ein den Schwenkweg des Betätigungshebels in Richtung Achsentlastung begrenzender äußerer Festanschlag vorgesehen ist, welcher am Minderergehäuse angeordnet und justierbar ausgebildet ist. Durch eine zwischen Betätigungshebel und Regelkolben wirksame vorgespannte Druckfeder wird der Regelkolben bei am äußeren Festanschlag anliegenden Betätigungshebel in seiner axialen Kolbenposition "Ventil geschlossen" in Richtung seiner Endlage mit einer einen Mindestumschaltdruck bestimmenden definierten Kraft beaufschlagt, deren Größe jedoch nicht näher erläutert ist.

Dieser vorbekannte Bremsdruckminderer kann vom Hersteller exakt auf eine Mindeststeuerkraft und damit auf einen Mindestumschaltdruck eingestellt und geprüft ausgeliefert werden. Die Einstellung erfolgt dabei derart, daß bei am äußeren Festanschlag anliegendem Betätigungshebel ein vorbestimmter Abstand zwischen Betätigungshebel und Regelkolben bzw. zwischen jeweils mit diesen beiden Bauteilen verbundenen anderen Bauelementen besteht. Durch diesen definierten Abstand zwischen Betätigungshebel und Regelkolben soll erreicht werden, daß beim späteren Einbau des vormontierten Bremsdruckminderers in das Kraftfahrzeug ein spielfreier Einbau der den Betätigungshebel mit einer lastabhängigen Federkraft beaufschlagenden Steuerfeder erleichtert wird bzw. das gewisse Längenfehleinstellungen dieser Steuerfeder innerhalb gewisser Grenzen ohne wesentlichen Einfluß auf den Mindestumschaltdruck bleiben.

Ein solcher vorbekannter Bremsdruckminderer besitzt daher den Vorteil, daß beim Einbau des Bremsdruckminderers in das Fahrzeug für die korrekte Einstellung des Umschaltdrucks keine besonderen Lehren verwendet werden müssen, oder zur Überprüfung der korrekten Umschaltdruckeinstellung erst ein Bremsdruckaufbau erforderlich ist.

Vor diesem Hintergrund liegt der Erfindung nun die Aufgabe zugrunde, einen Bremsdruckminderer der im Oberbegriff des Patentanspruchs 1 genannten Art weiter zu verbessern und dabei insbesondere so auszubilden, daß sein Betätigungshebel mit Sicherheit auch dann nicht Gefahr läuft etwa festzufrieren oder festzurosten, wenn das Fahrzeug über längere Zeit ausschließlich mit höherer Beladung gefahren wird.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Im Prinzip könnte eine derartige geknickte bzw. progressive Mindererkennung auch mit bekannten lastabhängigen Bremsdruckminderern erzeugt werden, nämlich dadurch, daß Steuerfedern mit entsprechend geknickter bzw. progressiver Federrate eingesetzt werden. Federn mit derartigen Federraten lassen sich bekanntlich jedoch nur durch Hintereinanderschalten mehrerer Zug- oder Druckfedern realisieren, was zum einen konstruktiv sehr aufwendig wäre und zum anderen zu einer erheblich vergrößerten Streuung der Federrate führen würde. Im übrigen wäre natürlich auch bei solcher Art gestalteten lastabhängigen Bremsdruckminderern die Genauigkeit der Umschaltdrücke, insbesondere der niedrigen Umschaltdrücke von ≦ 10 bar nur vergleichsweise gering.

Die Erfindung weist demgegenüber einen völlig neuen und günstigeren weg auf.

Anhand eines in der Zeichnung dargestellten Ausführungsbeispieles wird die Erfindung näher erläutert.

In der Zeichnung zeigen
- Fig. 1 und Fig. 2: eine Seitenansicht sowie eine Schnittdarstellung eines Bremsdruckminderers mit variablem Umschaltdruck gemäß der Erfindung in einer Twin-Ausführung und
- Fig. 3: ein Beispiel einer mit einem solchem Bremsdruckminderer realisierbaren Mindererkennung.

Das Ausführungsbeispiel zeigt einen Bremsdruckminderer in Twin-Ausführung, der z. B. zum Einsatz in einer hydraulischen Zweikreis-Bremsanlage in Diagonalaufteilung geeignet ist. Bei diesem Bremsdruckminderer befinden sich in einem gemeinsamen Minderergehäuse 3 parallel nebeneinander zwei gleiche unabhängig voneinander arbeitende Regeleinrichtungen, d. h. mit Ventilen 6, 6' bestückte axial verschiebliche Regelkolben 5, 5', welche über einen schwenkbar am Minderergehäuse 3 angelenkten gemeinsamen Betätigungshebel 2 mit einer lastabhängigen Federkraft einer Steuerfeder 4 linearer Kennung beaufschlagt werden.

Wenn die Regelkolben 5, 5' axial so weit verschoben werden, daß sie an einem minderergehäuseinneren Festanschlag 7, 7' zur Anlage gelangen, sind die Ventile 6, 6' geöffnet, weil die im Ausführungsbeispiel als Kugelkörper ausgebildeten Ventilkörper dann durch einen gehäusefesten Stößel 14, 14' jeweils gegen die Wirkung einer vorgespannten Ventilfeder 15, 15' von ihrem nicht weiter bezeichneten Ventilsitz abgehoben werden. Im dargestellten Ausführungsbeispiel befinden sich die beiden Regelkolben 5, 5, axial gerade in einem Abstand d zu ihren minderergehäuseinneren Festanschlägen 7, 7', bei dem die Ventilkörper gerade fest auf ihrem zugeordneten Ventilsitz aufliegen; sie befinden sich also in der Kolbenposition "Ventil geschlossen".

Die im Ausführungsbeispiel als Zugfeder ausgebildete Steuerfeder 4 greift mit ihrem einen Ende am freien Ende des Betätigungshebels 2 an. Ihr anderes Ende steht - wenn das Minderergehäuse 3 selbst in üblicher Weise am Fahrzeugaufbau o. ä. befestigt ist - mit der relativ zum Fahrzeugaufbau ein- und ausfedernden Achse, vorzugsweise der Hinterachse des Fahrzeugs in Verbindung, im allgemeinen jedoch nicht direkt, sondern unter Zwischenschaltung eines übersetzenden Zwischenhebels o. ä. Der vorerwähnte Zwischenhebel ist dabei derart angeordnet, daß sich die in Pfeilrichtung auf den Betätigungshebel 2 wirkende Zugkraft der Steuerfeder 4 mit zunehmender Fahrzeugbeladung vergrößert.

Am Minderergehäuse 3 ist ein äußerer Festanschlag 8 für den Betätigungshebel 2 vorgesehen. Dieser Festanschlag ist derart angeordnet, daß der Schwenkweg des Betätigungshebels 2 in Richtung Achsentlastung, die mit X angedeutet ist, begrenzt wird. Das bedeutet, daß der Betätigungshebel 2 selbst bei einer völligen Achsentlastung (maximales Ausfedern der Achse) nicht weiter als durch den äußeren Festanschlag 8 vorgegeben in Richtung X verschwenkt werden kann. Im Ausführungsbeispiel wird der äußere Festanschlag 8 durch eine in das Minderergehäuse 3 eingeschraubte, vorzugsweise mikroverkapselte o. ä. Schraube realisiert, deren Schraubenkopf als eigentlicher Anschlag wirkt.

Zwischen den Regelkolben 5, 5' und dem Betätigungshebel 2 ist jeweils eine Druckfeder 9, 9' angeordnet, welche sich mit ihrem einen Ende am Regelkolben 5, 5' und mit ihrem anderen Ende am Betätigungshebel, bzw. im dargestellten Ausführungsbeispiel an einem mit dem Betätigungshebel 2 in Verbindung stehenden waagebalkenartigen Druckstück 11 abstützen. Die Glieder dieser Anordnung sind dabei derart bemessen, daß der Regelkolben 5, 5' in seiner - dargestellten - axialen Kolbenposition "Ventil (6) geschlossen" bei am äußeren Festanschlag 8 anliegendem Betätigungshebel 2 von der Druckfeder 9, 9' mit einer definierten Vorspannung in Richtung des minderergehäuseinneren Festanschlages 7, 7' kraftbeaufschlagt ist.

Solange der Betätigungshebel 2 am Festanschlag 8 anliegt, d. h. solange die von der Steuerfeder 4 aufgebrachte Federkraft einen bestimmten Wert nicht überschreitet, wird also der Umschaltdruck des Bremsdruckminderers allein durch die definierte Vorspannung der Druckfedern 9, 9' bestimmt. Da die Vorspannung der Druckfeder 9, 9' bei der Herstellung des Bremsdruckminderers sehr genau eingestellt werden kann, ist auch die Genauigkeit des nur durch diese Druckfeder bestimmten Umschaltdrucks sehr hoch. Es ist somit auch ohne weiteres möglich, sehr genau Umschaltdrücke von ≦ 10 bar zu realisieren.

Die am Betätigungshebel 2 wirksamen Federvorrichtungen, d. h. insbesondere die Steuerfeder 4 sowie die Druckfeder 9 sind nun derart bemessen und aufeinander abgestimmt, daß der Betätigungshebel 2 jeweils erst dann von seinem äußeren Festanschlag 8 in Richtung Regelkolben 5, 5' abhebt, wenn die Fahrzeuglast bzw. die Achslast einen vorgegebenen vergleichsweise kleinen Wert überschreitet.

Durch die Anordnung des vorzugsweise justierbaren äußeren Festanschlags 8 werden die Regelkolben 5, 5' bei entsprechender Bemessung der am Betätigungshebel 2 wirksamen verschiedenen Federn im unteren Lastbereich, d. h. unterhalb einer konstruktiv vorgebbaren, vorzugsweise vergleichsweise geringen Fahrzeuglast bzw. Achslast wirkungsmäßig von der Steuerfeder 4 entkoppelt und nur von der definierten, herstellerseitig sehr genau einstellbaren Federkraft der Druckfeder 9, 9' in Richtung ihres jeweiligen gehäuseinneren Festanschlags 7, 7' beaufschlagt.

Bei drucklosem Bremsdruckminderer liegen die Regelkolben 5, 5' unter der Wirkung der auf sie einwirkenden Druckfedern 9, 9' dann an ihren gehäuseinneren Festanschlägen 7, 7' an, wobei die Ventile 6, 6' wegen der dabei zwangsweise von ihrem Ventilsitz abgehobenen kugelförmigen Ventilkörpern geöffnet sind.

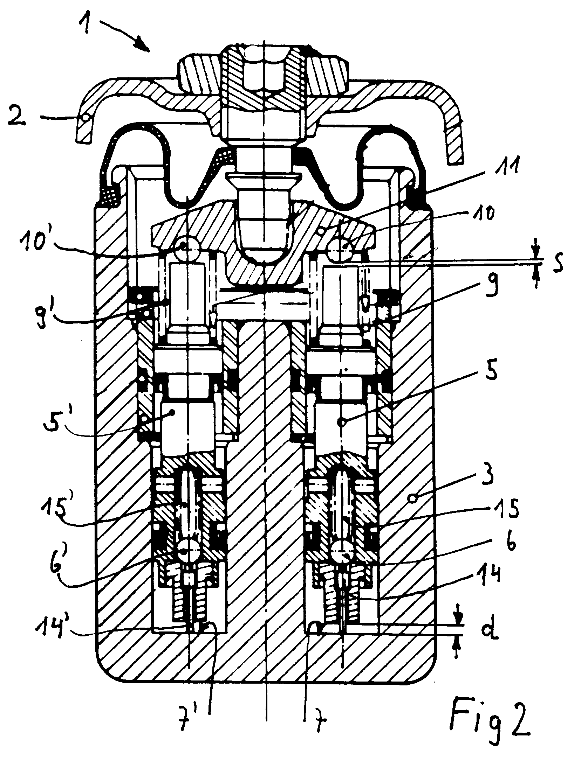

Wenn bei Betätigung der Betriebsbremse durch den nicht weiter dargestellten Hauptbremszylinder des Kraftfahrzeuges in der bzw. in den den Bremsdruckminderer 1 enthaltenden Bremsleitungen Hydraulikdruck aufgebaut wird, dann werden die Regelkolben 5, 5' infolge ihrer wirksamen Differenzflächen gegen die Wirkung der Druckfeder 9, 9' von ihrem gehäuseinneren Festanschlag 7, 7' abgehoben und mit zunehmendem Hydraulikdruck in Richtung Betätigungshebel 2 bzw. Druckstück 11 zurückgeschoben, bis sie schließlich bei Erreichen eines durch die definierte Vorspannung der Druckfeder 9, 9' eingestellten bestimmten, vergleichsweise niedrigen Hydraulikwerts gerade die in Fig. 2 dargestellte Kolbenposition "Ventil (6) geschlossen" einnehmen.
Dieser vergleichsweise niedrige Umschaltdruck von z. B. ≦ 10 bar ist in diesem unteren Lastbereich wegen der durch den äußeren Festanschlag 8 bewirkten Entkopplung der Steuerfeder 4 im Gegensatz zu bekannten lastabhängigen Bremsdruckminderern also völlig frei von irgendwelchen fertigungs- oder montagebedingten Toleranzen der Steuerfeder 4 oder des Betätigungshebels 2; auch während des Fahrbetriebs auftretende Verschmutzungen des Betätigungshebelsystems beeinträchtigen die Genauigkeit dieses niedrigen Umschaltdrucks nicht.

Während dieses Betriebszustands nimmt der Betätigungshebel 2 unter der Wirkung der ihn am äußeren Festanschlag 8 in Anlage haltenden Druckfedern 9, 9' die mit a bezifferte Hebellage ein; die Bemessung und Anordnung der Steuerfeder 4 muß hierbei natürlich derart sein, daß unterhalb der vorgegebenen, vorzugsweise vergleichsweise geringen Fahrzeug- bzw. Achslast das von ihr auf den Betätigungshebel 2 ausgeübte Schwenkmoment geringer ist als das von den Druckfedern 9, 9' in entgegengesetzter Richtung auf den Betätigungshebel 2 ausgeübte Schwenkmoment.

Auf diese Weise wird erreicht, daß der Betätigungshebel 2 erst bei Überschreiten dieser vorgegebenen niedrigen Last vom Festanschlag 8 in Richtung der Regelkolben 5, 5' abhebt und auf diese mit zunehmender Federkraft der Steuerfeder 4 infolge entsprechender Fahrzeug- bzw. Achslasterhöhung eine in entsprechender Weise zunehmende, in Richtung ihrer gehäuseinneren Festanschläge 7, 7' gerichtete Kraft ausübt, durch deren Höhe nunmehr betimmt wird, bei welchem Hydraulikdruck die dargestellte Kolbenposition "Ventil (6, 6') geschlossen" erreicht ist; oberhalb der oben erwähnten vorgegebenen vergleichsweise geringen Fahrzeuglast wird der Umschaltdruck nunmehr also durch die jeweils wirksame lastabhängige Federkraft der Steuerfeder 4 bestimmt.

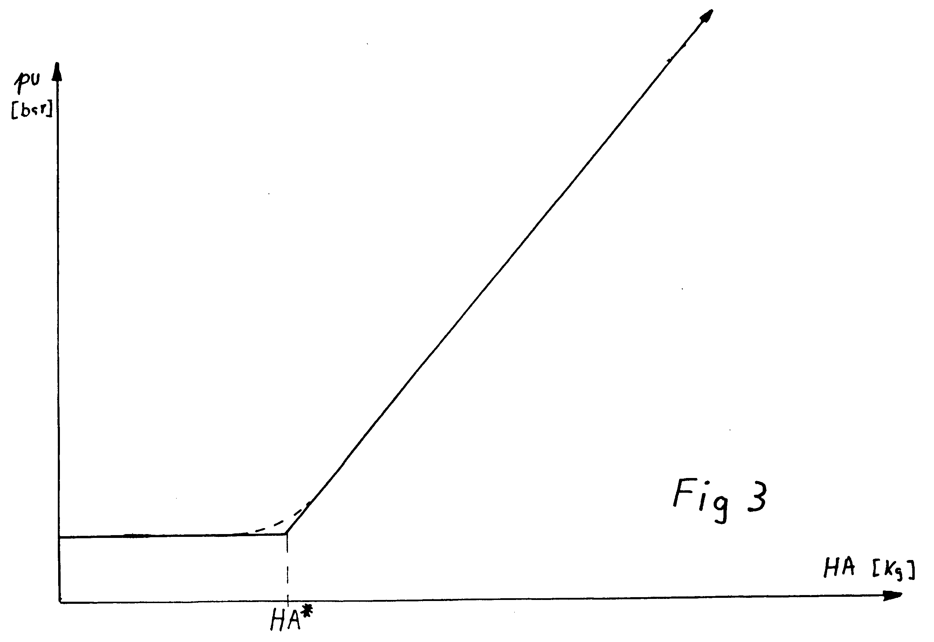

Auf diese Weise wird eine Mindererkennung erzielt, wie sie in Fig. 3 beispielhaft dargestellt ist. Unterhalb einer mit HA* bezifferten vergleichsweise geringen Fahrzeug- bzw. Achslast ist der ausschließlich durch die Druckfeder 9, 9' bestimmte Umschaltdruck im wesentlichen lastunabhängig und weist einen vergleichsweise niedrigen Wert auf, der z. B. in der Größenordnung von 8 bis 10 bar liegen kann. Oberhalb dieser Fahrzeug- bzw. Achslast nimmt der Umschaltdruck pu dagegen lastabhängig zu, wobei der Anstieg durch die lineare Kennung der Steuerfeder 4 bestimmt wird.

Bremsdruckminderer mit einer solchen geknickten bzw. progressiven Mindererkennung sind bestens für den Einsatz in solchen Kraftfahrzeugen geeignet, bei denen der Anteil der Hinterachslast am Gesamtgewicht des Fahrzeuges bei leerem Fahrzeug sehr klein und bei beladenem Fahrzeug sehr groß ist.

Wenn Regelkolben 5, 5', Betätigungshebel 2 mit Druckstück 11 und Druckfedern 9, 9' derart bemessen und aufeinander abgestimmt sind, daß dann, wenn die vorgespannten Druckfedern 9, 9' bei am äußeren Festanschlag 8 anliegendem Betätigungshebel auf die in der Kolbenposition "Ventil geschlossen" befindlichen Regelkolben 5, 5' mit einer definierten Federkraft einwirken, noch ein geringer Spalt s, z. B. in der Größenordnung von etwa 0,5 mm, zwischen den Regelkolben 5, 5' und dem Druckstück 11 des Betätigungshebels 2 verbleibt, dann ergibt sich in vorteilhafter Weise ein in Fig. 3 gestrichelter Übergang zwischen dem unteren lastunabhängigen konstanten Kennlinienast und dem ansteigenden lastabhängigen Kennlinienast. Dabei wird der verschleifte Übergang umso größer, je größer das Spaltmaß ist.

Im rechten Teil der Schnittdarstellung der Fig. 2 ist ein solcherart ausgebildeter Bremsdruckminderer beispielhaft angedeutet.

Die vom Druckstück 11 auf die Regelkolben 5, 5, ausgeübte Kraft wird im dargestellten Ausführungsbeispiel im übrigen durch fest mit dem Druckstück 11 verbundene Kugelglieder 10, 10' übertragen.

Zur Festlegung eines nur vergleichsweise geringen lastunabhängigen Umschaltdrucks von ≦ 10 bar wird eine Druckfeder 9, 9' mit einer vergleichsweise geringen Federkraft benötigt. Das bedeutet, daß die Federkraft der Steuerfeder 4 bei der vorerwähnten vorgegebenen vergleichsweise geringen Fahrzeug- bzw. Achslast dementsprechend auch nur erst vergleichsweise gering sein darf. Das hat prinzipiell jedoch zur Folge, daß die Steuerfeder dann bei leerem oder bei voll ausgefederter Achse nur noch eine sehr geringe oder aber gar keine Vorspannung mehr hätte, was während dieses Betriebszustandes ein störendes Klappern zur Folge hätte.

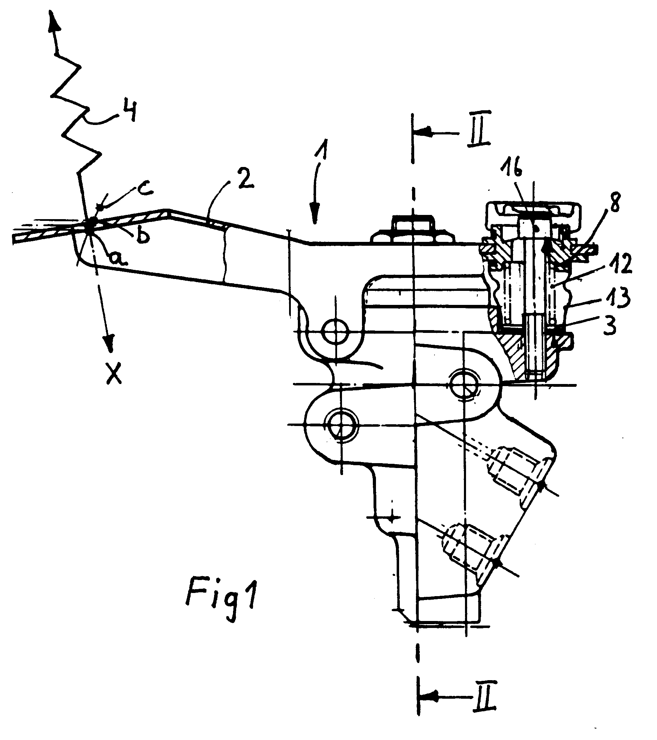

Um dies ohne wesentlichen Aufwand nachhaltig zu verhindern, ist es von Vorteil, eine der Steuerfeder 4 entgegenwirkende, definiert vorgespannte Federvorrichtung 12 vorzusehen, die vorzugsweise - wie in Fig. 1 dargestellt - zwischen Betätigungshebel 2 und Minderergehäuse 3 angeordnet und justierbar ist, was im dargestellten Ausführungsbeispiel z. B. durch die auch den äußeren Festanschlag 8 bildende Schraube 16 geschieht. Die Federkraft der Steuerfeder 4 muß bzw. kann dann entsprechend stärker vorgespannt werden, so daß sie aufgrund dessen auch bei leerem Fahrzeug bzw. bei voll ausgefederter Fahrzeugachse noch eine ein Klappern dieser Feder verhindernde geringe Vorspannung besitzt.

Beim erfindungsgemäßen Bremsdruckminderer sind die Regelkolben 5, 5' so lange vom Betätigungshebel 2 entkoppelt, wie dieser am äußeren Festanschlag 8 in Anlage gehalten wird; die Regelkolben 5, 5' werden während dieser Zeit durch die Druckfedern 9, 9' so lange ventilöffnend gegen ihren gehäuseinneren Festanschlag 7, 7' gedrückt, wie der Hydraulikdruck unterhalb des durch die vorgespannten Druckfedern 9, 9' bestimmten Umschaltdrucks liegt. Es ist leicht erkennbar, daß hierbei zwischen Druckstück 11 bzw. Kugelglied 10, 10' und Regelkolben 5, 5' ein gewisser Abstand entsteht, dessen Größe - solange der Betätigungshebel 2 noch am äußeren Festanschlag 8 und die Regelkolben 5, 5' am gehäuseinneren Festanschlag 7, 7' anliegen - der Summe aus dem Abstand d und - soweit konstruktiv vorgesehen - dem Spalt s entspricht.

Im Gegensatz dazu liegt der Betätigungshebel 2 bzw. dessen waagebalkenartiges Druckstück bei bekannten Bremsdruckminderern unter der Wirkung der lastabhängigen Steuerfeder, und zwar auch bei deren kleinstmöglichen Federkraft, ständig unmittelbar an den Regelkolben 5, 5' an, wodurch diese in der Kolbenposition "Ventil offen", d. h. am gehäuseinneren Festanschlag 7, 7' in Anlage gehalten werden. Der Betätigungshebel 1 nähme dabei die in Fig. 1 mit c bezifferte Hebelstellung ein.

Nur dann, wenn bei Betätigung der Betriebsbremse der für die jeweilige Fahrzeuglast maßgebliche Umschaltdruck erreicht wird, wenn also die Regelkolben gegen die Wirkung der von der Steuerfeder aufgebrachten lastabhängigen Federkraft in ihre Kolbenposition "Ventil geschlossen" zurückgedrückt werden, wird der Betätigungshebel 2 bei den bekannten Bremsdruckminderern aus dieser Hebelstellung c herausgeschwenkt. Das bedeutet aber, daß der Betätigungshebel dann unter Umständen für eine sehr lange Zeit überhaupt nicht bewegt wird, z. B. dann, wenn das Fahrzeug längere Zeit nicht leer, sondern z. B. mit Halb- oder Vollast betrieben wird; der dazugehörende lastabhängige Umschaltdruck pu ist dann nämlich vergleichsweise hoch, z. B. in der Größenordnung von etwa 80 bar, und wird nur bei hohen Fahrzeugverzögerungen erreicht, die vergleichsweise selten benötigt werden. Untersuchungen haben ergeben, daß in der Praxis in 90 Prozent aller Fälle nur Drücke in der Größenordnung von etwa 30 bar aufgebracht werden mußten. Ein längerer Zeit nicht bewegter Betätigungshebel ist aber gegen undefinierte Schwergängigkeit, z. B. infolge Korrosion oder Festfrierens, besonders anfällig.

Demgegenüber ist der erfindungsgemäße Bremsdruckminderer 1 mit geringstem konstruktiven Aufwand derart ausgebildet, daß der Betätigungshebel 2 mit Sicherheit auch dann nicht Gefahr läuft, etwa festzufrieren oder festzurosten, wenn das Fahrzeug über längere Zeit ausschließlich mit höherer Beladung gefahren wird.

Zu diesem Zweck wird in einfacher Weise eine der Steuerfeder 4 entgegenwirkende Zusatzfeder 13 mit entweder progressiver oder steiler linearer Kennung vorgesehen, deren Kennung derart bemessen ist, daß der mit den Regelkolben 5, 5' zusammenwirkende Teil des Betätigungshebels 2 (im Ausführungsbeispiel die Kugelglieder 10, 10') bei drucklosem Bremsdruckminderer 1 auch dann noch nicht ganz an den durch die Druckfeder 9, 9' an den gehäuseinneren Festanschlägen 7, 7' zur Anlage gebrachten Regelkolben 5, 5' zur Anlage gelangt, wenn von der Steuerfeder 4 eine der höchst zulässigen Fahrzeuglast, vorzugsweise Hinterachslast proportionale Kraft auf den Betätigungshebel 2 ausgeübt wird.

Diese Zusatzfeder wird vorzugsweise als progressive Gummifeder ausgebildet und mit Vorteil - wie in Fig. 1 dargestellt - zwischen Minderergehäuse 3 und Betätigungshebel 2 angeordnet, und zwar vorzugsweise konzentrisch zum durch die Schraube gebildeten äußeren Festanschlag 8.

Durch diese Zusatzfeder 13 wird erreicht, daß Änderungen der von der Steuerfeder 4 auf den Betätigungshebel 2 ausgeübten Kraft aufgrund von Achslaständerungen insbesondere bei drucklosem Bremsdruckminderer wirken, daß der Betätigungshebel 2 entsprechend der jeweils wirksamen Federrate dieser Zusatzfeder 13 ständig kleine Schwenkbewegungen ausführt, wodurch bereits im Ansatz einem verschmutzungs- oder korrosionsbedingten Schwergängigwerden oder Festrosten oder Festfrieren des Betätigungshebels 2 entgegengewirkt wird. Außerdem wird der Betätigungshebel 2 dabei abhängig von einer bestimmten Steuerfederkraft zwangsläufig auch im Übergangsbereich von der Druckzur Lastabhängigkeit des Minderers bewegt. Beim Übergang von der Druckabhängigkeit zur Lastabhängigkeit nimmt der Betätigungshebel 2 gerade eine in Fig. 1 mit b angedeute Hebelstellung ein, bei der er - bei entsprechender Steuerfederkraft - über seine Kugelglieder 10, 10' gerade an den in ihrer Kolbenposition "Ventil geschlossen" befindlichen Regelkolben 5, 5' zur Anlage gelangt. Die Größe der Schwenkwegdifferenz a-b hängt dabei von der Größe des in Fig. 2 dargestellten oben erwähnten Spalts s ab.

Die zweite Zusatzfeder 13 wird dabei vorzugsweise derart ausgebildet und in ihrer Kennung gewählt, daß sie erst dann eine spürbare Gegenfederkraft aufbringt, wenn diese Hebelstellung b erreicht ist.

Im dargestellten Ausführungsbeispiel sind zwei separate Zusatzfedern vorgesehen, nämlich eine vorgespannte erste Zusatzfeder 12, die dem Zweck dient, zur Vermeidung von Klappergeräuschen bei Leerlast o. ä. die Vorspannung der Steuerfeder 4 zu erhöhen, sowie eine zweite Zusatzfeder 13 mit vorzugsweise progressiver Kennung, die dem Zweck dient, insbesondere bei drucklosem Bremsdruckminderer möglichst über den gesamten Lastbereich des Fahrzeugs kleine Schwenkbewegungen des Betätigungshebels 2 zwischen a und c zu ermöglichen.
Grundsätzlich könnten die Funktionen der beiden Zusatzfedern 12 und 13 aber auch in einer Federvorrichtung vereinigt werden.

Der erfindungsgemäße Bremsdruckminderer zeichnet sich dadurch aus, daß er trotz geringen konstruktiven Aufwands und üblicher kompakter Bauweise ermöglicht, im sensiblen unteren Lastbereich des Fahrzeugs einen auf Dauer sehr genauen vergleichsweise geringen Umschaltdruck einzustellen. Er besitzt den großen Vorteil, daß er in nur einem konstruktiv vergleichsweise einfachen Bremsdruckregler die Funktionen eines im unteren Lastbereich wirksamen rein druckabhängigen und eines im übrigen Lastbereich wirksamen lastabhängigen Bremsdruckreglers sowie eines lastabhängigen Umschalters vom druckabhängigen zum lastabhängigen Bremsdruckregler und umgekehrt vereinigt.

Die Erfindung wurde anhand eines Bremsdruckminderers in Twin-Ausführung erläutert. Die Erfindung ist jedoch nicht auf eine solche für Zweikreis-Bremsanlagen bevorzugte Ausführungsform beschränkt. Sie ist auch nicht auf reine Bremsdruckminderer beschränkt, sondern umfaßt natürlich auch Bremsdruckbegrenzer, die ja lediglich einen Grenzfall des Bremsdruckminderers darstellen.

## Patentansprüche

1. Bremsdruckminderer (1) mit variablem Umschaltdruck (pu), mit einem von einer vorgespannten Steuerfeder (4) linearer Kennung mit lastabhängiger Federkraft beaufschlagten schwenkbaren Betätigungshebel (2), durch den ein ventilbestückter (6) axial verschiebbarer Regelkolben (5) bei ausreichend hoher Steuerfederkraft axial in eine ventilöffnende Endlage schiebbar ist,
mit einem den Schwenkweg des Betätigungshebels (2) in Richtung Achsentlastung (X) begrenzenden äußeren Festanschlag (8), der vorzugsweise am Minderergehäuse (3) selbst angeordnet und justierbar ausgebildet ist,
und mit einer zwischen Betätigungshebel (2) und Regelkolben (5) wirksamen vorgespannten Druckfeder (9), durch welche der Regelkolben (5) in seiner axialen Kolbenposition "Ventil (6) geschlossen" bei am äußeren Festanschlag (8) anliegendem Betätigungshebel (2) in Richtung Endlage mit einer einen Mindestumschaltdruck bestimmenden definierten Kraft beaufschlagt ist,
**gekennzeichnet durch nachstehende Merkmale:**
a) Die Druckfeder (9) ist mit einer Vorspannung vorgespannt, durch die unterhalb einer vorgegebenen vergleichsweise kleinen Fahrzeuglast in der Größenordnung von etwa 30 bis 40% der höchst zulässigen Last ein vergleichsweise niedriger lastunabhängiger fester Umschaltdruck von ≦ 10 bar, vorzugsweise von etwa 8 bis 10 bar, bewirkt wird.
b) Es ist eine der Steuerfeder (4) entgegenwirkende, vorzugsweise zwischen Betätigungshebel (2) und Minderergehäuse (3) angeordnete Zusatzfeder (13) mit progressiver oder steiler linearer Kennung vorgesehen, deren Kennung derart bemessen ist, daß der mit dem Regelkolben (5) unmittelbar zusammenwirkende Betätigungshebelteil (Kugelglied 10) bei drucklosem Bremsdruckminderer (1) sich auch dann gerade noch nicht am durch die Druckfeder (9) in seiner Endlage gehaltenen Regelkolben (5) abstützt, wenn von der Steuerfeder (4) eine der höchst zulässigen Fahrzeuglast, vorzugsweise Hinterachslast, proportionale Kraft auf den Betätigungshebel (2) ausgeübt wird.
c) Die am Betätigungshebel (2) wirksamen Federvorrichtungen (4, 9, 13, 12) sind derart bemessen und aufeinander abgestimmt, daß der Betätigungshebel (2) dann, aber erst dann vom äußeren Festanschlag (8) in Richtung Regelkolben (5) abhebt, wenn die vorgegebene vergleichsweise kleine Fahrzeuglast überschritten ist.

2. Bremsdruckminderer nach Anspruch 1,
**dadurch gekennzeichnet,**
daß, vorzugsweise zwischen Betätigungshebel (2) und Minderergehäuse (3), eine der Steuerfeder (4) entgegenwirkende vorgespannte weitere, vorzugsweise justierbare Zusatzfeder (12) angeordnet ist.

3. Bremsdruckminderer nach Anspruch 1 oder 2,
**dadurch gekennzeichnet,**
daß Betätigungshebel (2), äußerer Festanschlag (8), Regelkolben (5) und vorgespannte Druckfeder (9) derart bemessen und angeordnet sind, daß bei in seiner axialen Kolbenposition "Ventil (6) geschlossen" befindlichem Regelkolben (5) und bei am äußeren Festanschlag (8) anliegendem Betätigungshebel (2) zwischen dem Regelkolben (5) und dem mit ihm unmittelbar zusammenwirkenden Betätigungshebelteil (Kugelglied 10) noch ein geringer Spalt (s) besteht.

## Claims

1. Braking pressure regulator (1) having a variable switch-over pressure (pu), having a pivotable actuating lever (2) which is acted upon with a load-dependent resilient force by a prestressed control spring (4) of a linear characteristic curve, by means of which actuating lever a valve-equipped (6), axially displaceable control piston (5) is displaceable axially into a valve-opening end position when there is sufficient resilient control force, furthermore having a fixed outer stop (8) which defines the pivot path of the actuating lever (2) in the direction of the axle load alleviation (x), which fixed stop is itself preferably disposed on the regulator casing (3) and is adjustable, furthermore having a prestressed compression spring (9) which is effective between the actuating lever (2) and the control piston (5), by means of which compression spring the control piston (5), in its axial piston position "valve (6) closed" is acted upon in the direction towards the and position with a defined force, which determines a minimum switch-over pressure, when the actuating lever (2) is in position at the fixed outer stop (8),
characterised by virtue of the features hereinunder:
a) The compression spring (9) is prestressed with a prestressing force, by means of which below a predetermined comparatively small motor vehicle loading in the magnitude of approximately 30 to 40% of the maximum permissible load a comparatively low, independently of the load, fixed switch-over pressure of ≦10 bar, preferably from approximately 8 to 10 bar is produced.
b) An auxiliary spring (13) which counteracts the control spring (4) is disposed preferably between the actuating lever (2) and the regulator casing (3), which auxiliary spring is provided with a progressive or steep linear characteristic curve or has a characteristic curve which is such that the actuating lever part (spherical member 10), which cooperates directly with the control piston (5), in the absence of pressure at the braking pressure regulator (1) is also then especially not yet supported at the control piston (5) held in its end position by virtue of the compression spring (9), when a force proportional to the maximum permissible motor vehicle load, preferably rear axle load, is exerted by the control spring (4) on the actuating lever (2).
c) The resilient devices (4, 9, 13, 12) effective on the actuating lever (2) are dimensioned and correspond to each other in such a way that the actuating lever (2) is raised from the fixed outer stop (8) in the direction of the control piston (5) only when the predetermined comparatively small motor vehicle load is exceeded.

2. Braking pressure regulator according to Claim 1, characterised in that a further, prestressed, preferably adjustable, auxiliary spring (12) which counteracts the control spring (4) is disposed preferably between the actuating lever (2) and the regulator casing (3).

3. Braking pressure regulator according to Claim 1 and 2, characterised in that the actuating lever (2), the fixed outer stop (8), the control piston (5) and the prestressed compression spring (9) are dimensioned and disposed such that when the control piston (5) is located in its axial piston position "valve (6) closed" and when the actuating lever (2) is in position at the fixed outer stop (8) there is still a small gap (s) between the control piston (5) and the actuating lever part (spherical member 10) which cooperates directly with the control piston.

## Revendications

1. Réducteur de pression de freinage (1) à pression de commutation variable (pu), comprenant un levier d'actionnement (2) qui est sollicité par une force élastique dépendante de la charge au moyen d'un ressort de commande précontraint (4) à caractéristique linéaire, et par l'intermédiaire duquel, lorsque la force élastique de commande est suffisamment élevée, un piston de régulation (5) à mouvement axial muni d'une valve (6) peut être amené axialement dans une position extrême correspondant à une ouverture de la valve, comprenant une butée fixe extérieure (8) qui limite la course pivotante du levier d'actionnement (2) dans le sens (X) de déchargement d'essieu et qui, de préférence, est montée sur le boîtier proprement dit (3) du réducteur et est de conception réglable, et comprenant un ressort de pression précontraint (9) qui agit entre le levier d'actionnement (2) et le piston de régulation (5) et par l'intermédiaire duquel, lorsque le levier d'actionnement (2) est appliqué contre la butée fixe extérieure (8), le piston de régulation (5) se trouvant dans sa position axiale de " valve (6) fermée " est sollicité en direction de la position extrême avec une force définie qui détermine une pression de commutation minimale, caractérisé en ce que a) le ressort de pression (9) est précontraint par une précontrainte qui, en dessous d'une charge de véhicule comparativement faible prédéfinie, de l'ordre d'environ 30 à 40 % de la charge maximale autorisée, produit une pression de commutation fixe, indépendante de la charge et comparativement faible, inférieure ou égale à 10 bars, de préférence d'environ 8 à 10 bars, b) il est prévu un ressort supplémentaire (13) à caractéristique linéaire progressive ou accentuée, qui agit à l'encontre du ressort de commande (4), qui est disposé de préférence entre le levier d'actionnement (2) et le boîtier (3) du réducteur et dont la caractéristique est calculée pour que, lorsque le réducteur de pression de freinage (1) est sans pression, la partie (organe sphérique 10) du levier d'actionnement qui coopère directement avec le piston de régulation (5) ne soit pas encore en appui sur le piston de régulation (5) maintenu en position extrême par le ressort de pression (9), si le ressort de commande (4) exerce sur le levier d'actionnement (2) une force proportionnelle à la charge maximale autorisée du véhicule, de préférence à la charge de l'essieu arrière, c) les dispositifs élastiques (4, 9, 13, 12) agissant sur le levier d'actionnement (2) sont dimensionnés et ajustés les uns par rapport aux autres, de façon que le levier d'actionnement (2) ne décolle de la butée fixe extérieure (8) en direction du piston de régulation (5) que si, et seulement si, la charge du véhicule comparativement faible prédéterminée est dépassée.

2. Réducteur de pression de freinage selon la revendication 1, caractérisé en ce qu'il est prévu, de préférence entre le levier d'actionnement (2) et le boitier (3) du réducteur, un autre ressort supplémentaire précontraint (12) de préférence réglable et agissant à l'encontre du ressort de commande (4).

3. Réducteur de pression de freinage selon la revendication 1 ou 2, caractérisé en ce que le levier d'actionnement (2), la butée fixe extérieure (8), le piston de régulation (5) et le ressort de pression précontraint (9) sont dimensionnés et disposés de façon que, lorsque le piston de régulation (5) se trouve en position axiale de " valve (6) fermée " et lorsque le levier d'actionnement (2) est appliqué contre la butée fixe extérieure (8), il reste un léger interstice (s) entre le piston de régulation (5) et la partie (organe sphérique 10) du levier d'actionnement qui coopère directement avec lui.
